# EUROPÄISCHE PATENTANMELDUNG

(11) **EP 1 594 303 A1**
(43) Veröffentlichungstag der Anmeldung: **09.11.2005**
(21) Anmeldenummer: 04010672.6
(22) Anmeldetag: 05.05.2004
(51) Int. Cl.: H04N 1/60

(54) **Verfahren zum Optimieren eines Sonderfarben enthaltenden digitalen Dokuments**

(71) Anmelder: GretagMacbeth AG, 8105 Regensdorf (CH)
(72) Erfinder: Beyer, martin, 59192 Bergkamen (DE); Lamy, Francis, 8832 Wollerau (CH); Senn, Thomas, 8157 Dielsdorf (CH)
(74) Vertreter: Schwabe - Sandmair - Marx

(57) **Zusammenfassung**

Für die Optimierung eines als Vorlage in einem Reproduktionsprozess, insbesondere einem Druckprozess dienenden, Daten zu Sonderfarben enthaltenden digitalen Dokuments im Hinblick auf farbgetreue Wiedergabe in diesem Reproduktionsprozess wird das digitale Dokument (3) auf Vorhandensein von Sonderfarben untersucht und die Sonderfarben im Dokument (3) werden durch Ersatzfarben mit Standard-Farbdefinitionen ersetzt. Die Definitionen für die Ersatzfarben können manuell eingegeben, aus einer Farbbibliothek entnommen oder durch Farbmessung an einer körperlichen Farbreferenz bestimmt werden.

## Beschreibung

Die Erfindung betrifft ein Verfahren zum Optimieren eines als Vorlage in einem Reproduktionsprozess, insbesondere einem Druckprozess dienenden, Daten zu Sonderfarben enthaltenden digitalen Dokuments im Hinblick auf farbgetreue Wiedergabe in diesem Reproduktionsprozess gemäss dem Oberbegriff des unabhängigen Anspruchs.

In der grafischen Industrie erfolgen die Arbeitsabläufe in immer stärkerem Masse auf digitaler Basis. Für einen Druckauftrag erstellt der Designer heute die Vorlage mittels mächtiger Software-Anwendungen als digitales Dokument und übermittelt dieses über ein geeignetes Transport-Medium an den Reprographen. Dieser führt das Dokument einem Farbseparationsrechner (Raster Image Prozessor, RIP) zu, welcher daraus automatisch die Farbrasterauszüge für den späteren Druckprozess berechnet. Üblicherweise wird für die Dokumente das bekannte PDF-Format (Portable Document Format) oder das PS-Format (Post Script) verwendet, es können aber auch andere digitale Formate verwendet werden, mit denen der eingesetzte Farbseparationsrechner umgehen kann..

Ein Problem entsteht, wenn der Designer in seiner Vorlage Sonderfarben verwendet, die nicht durch Koordinatenwerte der üblicherweise verwendeten Farbräume (Lab oder CMYK) definiert sind. Solche Sonderfarben bzw. Schmuckfarben oder Spot Colors kann der Farbseparationsrechner im allgemeinen nicht oder nicht korrekt verarbeiten, so dass das finale Druckergebnis mit grosser Wahrscheinlichkeit farblich unbefriedigend ausfallen wird.

Durch die vorliegende Erfindung soll nun diese Schwierigkeit überwunden werden. Konkreter soll durch die Erfindung die Voraussetzung dafür geschaffen werden, dass auch bei solchen digitalen Vorlagedokumenten, welche Sonderfarben enthalten, zu farblich befriedigenden Reproduktionsresultaten gelangt werden kann. Unter Reproduktion wird dabei insbesondere ein Druckprozess verstanden, es kann sich dabei aber auch um jeden anderen Ausgabeprozess handeln, z.B. etwa die Darstellung auf einem Bildschirm.

Diese der Erfindung zugrundeliegende Aufgabe wird durch das durch die Merkmale des unabhängigen Anspruchs gekennzeichnete erfindungsgemässe Verfahren gelöst.

Vorteilhafte Ausgestaltungen und Weiterbildungen des erfindungsgemässen Verfahren sind Gegenstand der abhängigen Ansprüche.

Gemäss dem Hauptgedanken der Erfindung werden also alle im digitalen Dokument enthaltenen Sonderfarben durch passende Standard-Farbdefinitionen ersetzt und das Dokument entsprechend modifiziert. Dies kann durch manuelle Eingabe, Auswahl aus einer Farbbibliothek oder durch Einmessen erfolgen. Die Ersatzfarben können dabei im Dokument z.B. als Koordinaten des Lab-Farbraums oder, falls das Profil des eingesetzten Reproduktionsprozesses bekannt ist, auch durch Koordinaten des Reproduktionsfarbraums definiert werden.

### Im folgenden wird die Erfindung anhand der Zeichnung näher erläutert. Es zeigen:

- Fig. 1: ein allgemeines Übersichtsschema des Arbeitsflusses eines Druckauftrags,
- Fig. 2: ein Flussdiagramm eines Ausführungsbeispiels des erfindungsgemässen Verfahrens und
- Fig. 3: ein Flussdiagramm einiger Detailschritte des Verfahrens der Fig. 2.

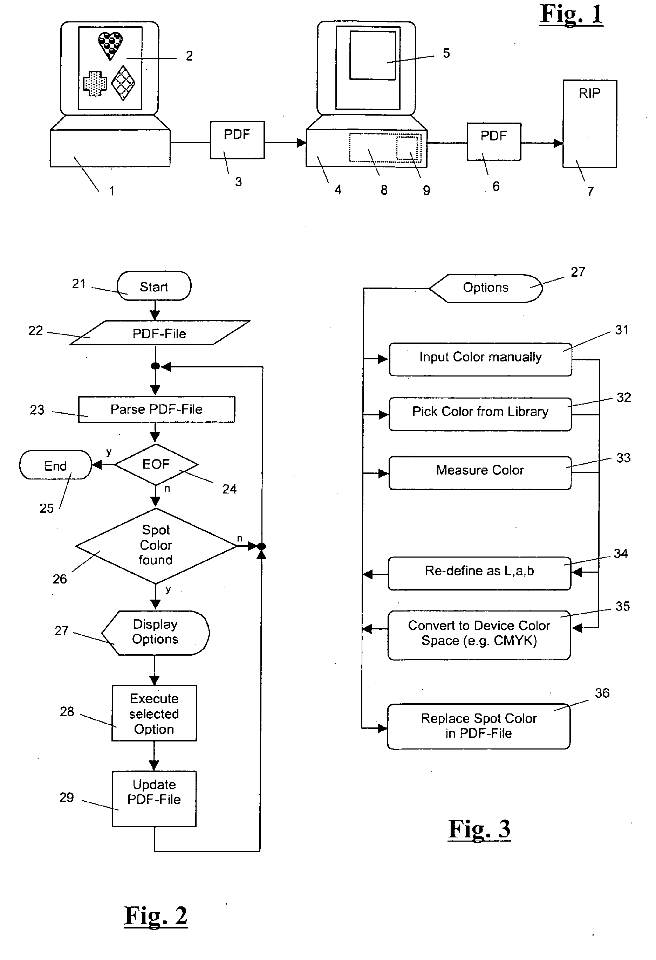

Wie die Fig. 1 zeigt, erstellt der Designer an einem Rechner 1 mittels einer geeigneten, idealerweise Color Management fähigen Software-Anwendung (eines der gängigen Desktop Publishing Programme wie z. B. "Express" von Quark) eine Druckvorlage 2, die er nach Fertigstellung als digitales Dokument 3 z.B. im PDF-Format abspeichert. Die Druckvorlage kann in an sich bekannter Weise sowohl grafische Elemente als auch Textelemente enthalten. Für einige Elemente der Druckvorlage 2 wurden Sonderfarben gewählt. Sofern die Software-Anwendung die Abspeicherung des Dokuments im PDF-Format nicht unterstützt, kann die Konvertierung in dieses Format natürlich auch mit einer dafür vorgesehenen separaten Anwendung, z.B. "Acrobat" von Adobe erfolgen.

Das digitale Dokument 3 wird nun an die Repro-Anstalt übermittelt (z.B. via E-Mail oder über ein anderes digitales Transport-Medium) und wird in einem Rechner 4 in noch näher zu beschreibender Weise erfindungsgemäss analysiert und ggf. modifiziert. Dabei werden auf dem Bildschirm des Rechners 4 Informationen und Interaktionsoptionen 5 dargestellt und angeboten. Das ggf. modifierte digitale Dokument 6 wird dann einem Farbseparationsrechner (Raster Image Prozessor, RIP) 7 zugeführt, und dieser berechnet daraus in an sich bekannter Weise die für den späteren Druckprozess erforderlichen Farbauszüge.

Im Rechner 4 läuft eine an sich bekannte Software-Anwendung 8, welche das digitale Dokument 3 lesen kann. Typischerweise wird dazu "Acrobat" von Adobe eingesetzt. Zusätzlich ist im Rechner 4 eine Spezial-Anwendung 9 installiert, welche die im folgenden beschriebenen erfindungsgemässen Verfahrensschritte ausführt. Diese Spezial-Anwendung 9 ist vorzugsweise als Ergänzung (sog. Plug-In) zur PDF-Lese-Anwendung 8 implementiert. Die programmtechnische Realisierung der Verfahrensschritte und speziell auch der Einbindung in die PDF-Lese-Anwendung 8 liegt im Bereich des Könnens des durchschnittlichen Fachmanns und ist nicht Gegenstand der Erfindung.

Sobald das digitale Dokument 3 in die PDF-Lese-Anwendung 8 geladen ist, wird die Spezial-Anwendung 9 entweder automatisch oder manuell gestartet. Dabei werden dann die nachfolgend erläuterten und in den Figuren 2 und 3 schematisch dargestellten erfindungsgemässen Verfahrensschritte durchgeführt.

Nach dem Programmstart (Block 21) wird das geladene digitale Dokument (Block 22) in an sich bekannter Weise abschnittsweise ausgelesen (Block 23). Für jeden Abschnitt wird untersucht, ob er die Beschreibung einer Sonderfarbe enthält (Block 26). Falls im Abschnitt keine Sonderfarbe gefunden wurde, wird der nächste Abschnitt analysiert. Das Ganze wird solange wiederholt, bis das Ende des Dokuments erreicht ist (Block 24) und der Vorgang zu Ende ist (Block 25).

Wenn eine Sonderfarbe gefunden wird (Block 26), wird dies auf dem Bildschirm angezeigt, und es werden Optionen für weitere Vorgehensweisen angeboten (Block 27). Diese Optionen bestehen grundsätzlich darin, die gefundene Sonderfarbe neu zu definieren. Details dazu werden weiter unten erläutert. Der Benutzer wählt nun eine der angebotenen Optionen aus, führt die dazugehörigen Tätigkeiten durch und definiert auf diese Weise die Sonderfarbe neu.(Block 28). Schliesslich wird die Neu-Definition der Sonderfarbe in das digitale Dokument geschrieben und dieses damit aktualisiert (Block 29). Die Abläufe werden solange wiederholt, bis alle Sonderfarben gefunden und durch Neu-Definitionen ersetzt sind.

Es versteht sich, dass ohne weiteres auch zuerst alle Sonderfarben ermittelt und die Neu-Definitionen derselben erst im Anschluss vorgenommen werden können.

Eine Auswahl der wichtigsten Optionen 27 ist in Fig. 3 schematisch dargestellt. Die einfachste Möglichkeit besteht darin, die Definition der Sonderfarbe durch manuelle Eingabe von entsprechenden Farbwerten vorzunehmen (Block 31). Die Spezial-Anwendung 9 sieht dazu in an sich bekannter Weise entsprechende Eingabe-Fenster vor und stellt vorzugsweise auch die eingegebene Farbe grafisch auf dem Monitor dar. Die so definierte Ersatzfarbe kann auch für weitere Verwendungen in einer Farbdatenbibliothek abgespeichert werden (siehe auch nächster Absatz).

Eine weitere Möglichkeit besteht darin, eine Ersatzfarbe aus einer im Rechner 4 gespeicherten (oder extern eingelesenen) Farbdatenbibliothek auszuwählen (Block 32). Dazu werden z.B. die in der Biblithek enthaltenen Farben in einem Auswahlmenü durch die Spezial-Anwendung 9 grafisch dargestellt. Als Farbdatenbibliothek kommt vorzugsweise eine im an sich bekannten CxF-Format (Color Exchange Format) vorliegende Bibliothek zum Einsatz.

Als eine weitere Möglichkeit kann vorgesehen sein, die Ersatzfarben für die Sonderfarben durch Farbmessung an einer körperlichen Farbreferenz zu bestimmen (Block 33). Dies kann mittels eines an den Rechner 4 angeschlossenen Farbmessgeräts (z.B. das Spektralphotometer "EyeOne" von Gretag-Macbeth AG) erfolgen, wobei dieser Vorgang durch die Spezial-Anwendung 9 in an sich bekannter Weise unterstützt werden kann.

Die jeweiligen Ersatzfarben werden normalerweise durch Koordinatenwerte im Lab-Farbraum definiert (Block 34). Alternativ kann aber die Definition auch im Farbraum des späteren Druckprozesses (normalerweise CMYK) erfolgen (Block 35). Dazu ist allerdings erforderlich, dass die Farbübertragungscharakteristiken (das Farbprofil) des Druckprozesses (bzw. generell Reproduktionsprozesses) bekannt sind.

Schliesslich werden dann die Ersatzfarben bzw. Neu-Definitionen aller im Dokument enthaltenen Sonderfarben in das Dokument geschrieben, und das aktualisierte Dokument wird wieder im ursprünglichen Format abgespeichert (Block 36). Dies erfolgt in an sich bekannter Weise nach denselben syntaktischen Regeln, wie sie auch schon bei der Abspeicherung des ursprünglichen Dokuments angewandt wurden. Der Fachmann bedarf dazu keiner näheren Erläuterung.

Es versteht sich, dass die Spezial-Anwendung 9 in an sich bekannter Weise beliebig ausgebaut werden kann, um die erforderlichen Aktionen für den Anwender möglichst einfach, intuitiv und übersichtlich zu gestalten.

### Bezugszeichenliste

- 1: Rechner
- 2: Druckvorlage
- 3: digitales Dokument, z.B. im PDF-Format
- 4: Rechner
- 5: Interaktionsoptionen
- 6: modifiziertes digitales Dokument
- 7: Farbseparationsrechner, Raster Image Prozessor, RIP
- 8: Software-Anwendung, PDF-Lese-Anwendung
- 9: Spezial-Anwendung

- 21: Programmstart
- 22: geladenes digitales Dokument, PDF-Datei
- 23: geladenes digitales Dokument bzw. PDF-Datei auslesen
- 24: Ende des Dokuments bzw. der Datei
- 25: Ende des Vorgangs
- 26: Sonderfarbe gefunden
- 27: Optionen anbieten bzw. anzeigen
- 28: ausgewählte Optionen durchführen
- 29: digitales Dokument bzw. PDF-Datei aktualisieren

- 27: Optionen
- 31: Ersatzfarbe durch manuelle Eingabe definieren
- 32: Ersatzfarbe aus Farbdatenbibliothek auswählen
- 33: Ersatzfarbe durch Farbmessung bestimmen
- 34: im Lab-Farbraum neu definieren
- 35: in Farbraum des Druckprozesses (z.B. CMYK) umwandeln
- 36: Sonderfarbe im Dokument bzw. in der PDF-Datei ersetzen

## Patentansprüche

1. Verfahren zum Optimieren eines als Vorlage in einem Reproduktionsprozess, insbesondere einem Druckprozess dienenden, Daten zu Sonderfarben enthaltenden digitalen Dokuments im Hinblick auf farbgetreue Wiedergabe in diesem Reproduktionsprozess, **dadurch gekennzeichnet, dass** das digitale Dokument (3) auf Vorhandensein von Sonderfarben untersucht wird und dass die Sonderfarben im Dokument (3) durch Ersatzfarben mit Standard-Farbdefinitionen ersetzt werden.

2. Verfahren nach Anspruch 1, **dadurch gekennzeichnet, dass** wenigstens eine der Ersatzfarben durch manuelle Eingabe definiert wird.

3. Verfahren nach einem der vorangehenden Ansprüche, **dadurch gekennzeichnet, dass** wenigstens eine der Ersatzfarben durch Auswahl aus einer Farbdatenbibliothek definiert wird.

4. Verfahren nach einem der vorangehenden Ansprüche, **dadurch gekennzeichnet, dass** wenigstens eine der Ersatzfarben durch Farbmessung an einer körperlichen Farbreferenz definiert wird.

5. Verfahren nach einem der vorangehenden Ansprüche, **dadurch gekennzeichnet, dass** wenigstens eine der Ersatzfarben durch Koordinatenwerte im Lab-Farbraum definiert wird.

6. Verfahren nach einem der vorangehenden Ansprüche, **dadurch gekennzeichnet, dass** wenigstens eine der Ersatzfarben durch Koordinatenwerte im Farbraum des Reproduktionsprozesses definiert wird.

7. Verfahren nach einem der vorangehenden Ansprüche, **dadurch gekennzeichnet, dass** das digitale Dokument () im PDF- oder PS-Format vorliegt.

8. Verfahren nach einem der vorangehenden Ansprüche, **dadurch gekennzeichnet, dass** das digitale Dokument () nach dem Ersatz der Sonderfarben im selben digitalen Format gespeichert wird wie das ursprüngliche digitale Dokument.
